# EUROPÄISCHE PATENTSCHRIFT

(11) **EP 4 083 486 B1**
(45) Veröffentlichungstag und Bekanntmachung des Hinweises auf die Patenterteilung: **08.02.2023**
(21) Anmeldenummer: 21171273.2
(22) Anmeldetag: 29.04.2021
(51) Int. Cl.: F16L 21/03, F16J 15/10, F16L 37/091

(54) **LEITUNGSKUPPLUNG**
LINE COUPLING
CONNECTEUR

(43) Veröffentlichungstag der Anmeldung: 02.11.2022
(73) Patentinhaber: AVS, Ingenieur J.C. Römer GmbH, 94481 Grafenau (DE)
(72) Erfinder: Silberbauer, Günther, 94481 Grafenau (DE)
(74) Vertreter: Wolf, Gerhard

(56) Entgegenhaltungen:
- EP-A1- 3 770 475
- IE-A1- 960 692
- US-A1- 2019 195 401
- US-B2- 10 982 798

## Beschreibung

Die Erfindung betrifft eine Leitungskupplung zur Verbindung einer Leitung, insbesondere eines flexiblen Schlauchs, mit einer weiteren Leitung oder mit einem Bauteil, beispielsweise einem Ventil, einen Verteiler, einer Pumpe etc.

Derartige Leitungskupplungen sind bereits bekannt, beispielsweise als Einzelkupplungen oder mit mehreren Abgängen, in gerader, winkliger Ausführung oder auch als T-Stück. Sie weisen ein Gehäuse mit einem Aufnahmebereich auf, in den das freie Ende einer Leitung eingeschoben wird. Die Leitungskupplung weist eine Klemmeinrichtung auf, mittels der die Leitung gegen ein unerwünschtes Herausziehen aus der Leitungskupplung oder ein durch den anliegenden Überdruck bedingtes Herausdrücken von innen herausgesichert wird. Diese Klemmeinrichtung kann manuell gelöst werden, so dass die Leitung aus der Leitungskupplung wieder herausgezogen werden kann. Zur Abdichtung der Schnittstelle zwischen der Leitung und dem Gehäuse kann ein Dichtelement vorgesehen sein.

Ein wesentlicher Nachteil bekannter Leitungskupplungen besteht darin, dass diese Toträume zwischen dem freien Ende der Leitung, dem Dichtelement und dem Gehäuse ausbilden. Derartige Toträume sind insbesondere bei hygienesensitiven Anwendungen, beispielsweise in der Lebensmitteltechnik oder der Medizintechnik unerwünscht, da sie zu Dekontaminationen des geförderten Mediums führen können.

Die Druckschrift US 2004/0262920 A1 offenbart eine Leitungskupplung mit reduzierten Toträumen.

Nachteilig ist jedoch, dass bei derartigen Dichtungen, wie sie beispielsweise in der US 2004/0262920 A1 gezeigt sind, Undichtigkeiten entstehen können, wenn der aus der Leitungskupplung abstehende Leitungsabschnitt gebogen oder anderweitig deformiert wird.

Die Druckschrift EP 3 770 475 A1 offenbart eine Rohrverbindung, mittels der das freie Rohrende eines ersten Rohres mit einer Rohrmuffe eines zweiten Rohres verbunden wird.

Die Druckschrift US 2019/0195401 A1 offenbart einen Dichtring für eine Leitungskupplung. Der Dichtring ist O-ringartig ausgebildet.

Die Druckschrift IE 960692 A offenbart eine Leitungsverbindung mit einer Dichtung, die einen Hauptdichtabschnitt und einen davon abstehenden Hygieneabschnitt aufweist.

Die Druckschrift US 10,982,798 B2 offenbart ein Pressverbindungsfitting mit einem hülsenartig ausgebildeten Dichtelement.

Ausgehend hiervon ist es Aufgabe der Erfindung, eine Leitungskupplung anzugeben, die möglichst totraumfrei bei gleichzeitig hoher Dichtigkeit ausgebildet ist.

Die Aufgabe wird durch eine Leitungskupplung mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf eine Leitungskupplung. Die Leitungskupplung umfasst ein Gehäuse mit einem Aufnahmeraum für einen Leitungsabschnitt. Des Weiteren sind Fixiermittel zum lösbaren Fixieren des Leitungsabschnitts in dem Gehäuse vorgesehen. Zudem weist die Leitungskupplung ein Dichtelement auf, das in dem Aufnahmeraum angeordnet und dazu ausgebildet ist, das im Aufnahmeraum aufgenommene freie Ende des Leitungsabschnitts außenumfangsseitig zu umschließen und dabei die Schnittstelle zwischen dem Gehäuse und dem Leitungsabschnitt fluiddicht abzudichten. Das Dichtelement ist hülsenförmig mit einem ersten und einem zweiten freien Ende ausgebildet. Das erste Ende der Dichtung ist einer Eingangsöffnung der Leitungskupplung zugewandt, über die eine gegenüber dem Gehäuse abzudichtende Leitung in den Aufnahmeraum einführbar ist. Am ersten freien Ende ist eine Wulst vorgesehen. Diese Wulst umgibt die in den Aufnahmeraum eingeschobene Leitung beispielsweise umfangsseitig. Von der Wulst steht ein rohrförmiger Abschnitt ab, der randseitig das zweite freie Ende ausbildet.

Der technische Vorteil der Leitungskupplung besteht darin, dass durch den rohrförmigen Abschnitt des Dichtelements eine Reduzierung des Totraums erreicht wird und darüber hinaus aufgrund der Wulst eine hohe Dichtigkeit der Leitungskupplung erreicht wird.

Erfindungsgemäß ist der rohrförmige Abschnitt des Dichtelements zumindest im eingebauten Zustand des Dichtelements zum zweiten freien Ende hin innenseitig konisch verjüngt ausgebildet, d.h. der Innendurchmesser des rohrförmigen Abschnitts verringert sich in Richtung des zweiten freien Endes. Die konische Verjüngung kann entweder dadurch erreicht sein, dass das Dichtelement an sich, d.h. auch dann, wenn es nicht im Gehäuse der Leitungskupplung aufgenommen ist, eine derartige innenseitige Konusform aufweist. Alternativ kann die konische Verjüngung auch durch das Gehäuse der Leitungskupplung erreicht werden, d.h. die Dichtung wird beim Einbauen in das Gehäuse derart radial gestaucht, dass sich der Innendurchmesser des rohrförmigen Abschnitts in Richtung des zweiten freien Endes verringert. Durch die konische Form des rohrförmigen Abschnitts wird eine hohe Dichtigkeit auch bei einem Abbiegen oder anderweitigem Verformen der aus der Leitungskupplung herausstehenden Leitung erreicht.

Gemäß einem Ausführungsbeispiel ist die Wulst O-Ring-förmig ausgebildet. In anderen Worten weist die Wulst eine kreisförmige Grundform mit einem kreisförmigen oder im wesentlichen kreisförmigen Querschnitt auf. Dadurch wird eine Dichtebene geschaffen, die eine hohe Leckage-Sicherheit garantiert. Im eingebauten Zustand der Dichtung ist diese Wulst in axialer Richtung der Leitung gesehen beabstandet zum freien Ende der Leitung vorgesehen. Die Wulst ist insbesondere zwischen einem Anschlag, gegenüber dem das freie Ende der Leitung anliegt und der Einführöffnung der Leitungskupplung vorgesehen.

Die Wulst weist vorzugsweise einen Querschnittsdurchmesser auf, der größer ist als die Wandstärke des rohrförmigen Abschnitts in einem Bereich, der unmittelbar an die Wulst angrenzt. Dadurch kann ein innen-und außenseitiges Überstehen der Wulst erreicht werden, was Vorteile beim Abdichten der Schnittstelle zwischen dem Dichtelement und dem Gehäuse und der Schnittstelle zwischen Dichtelement und Leitungsabschnitt bietet.

Gemäß einem Ausführungsbeispiel weist der rohrförmige Abschnitt im Bereich des zweiten freien Endes in Längsrichtung gesehen einen konstanten Außendurchmesser auf. Dadurch kann bei einer im Gehäuse vorgesehenen, zylindrischen Ausnehmung für den rohrförmigen Abschnitt eine hohe Dichtigkeit bei gleichzeitiger Vermeidung von Toträumen erreicht werden.

Gemäß einem Ausführungsbeispiel ist das Dichtelement derart klemmend im Gehäuse gehalten, dass der rohrförmige Abschnitt, dessen Außendurchmesser sich im ausgebauten Zustand des Dichtelements in Längsrichtung gesehen zum zweiten freien Ende hin konisch aufweitet, im eingebauten Zustand des Dichtelements radial komprimiert wird, so dass sich im eingebauten Zustand des Dichtelements ein reduzierter Innendurchmesser des rohrförmigen Abschnitts ergibt. Ein sich zum zweiten freien Ende hin konisch aufweitender rohrförmiger Abschnitt kann damit durch das Gehäuse der Leitungskupplung derart radial verformt werden, dass sich der Innendurchmesser des rohrförmigen Abschnitts zum zweiten freien Ende hin konisch verjüngt und damit eine hohe Dichtigkeit der Leitungskupplung erreicht wird.

Gemäß einem anderen Ausführungsbeispiel ist der rohrförmige Abschnitt zum zweiten freien Ende hin außenseitig konisch verjüngt ausgebildet. Dadurch kann zwischen dem Dichtelement und dem Gehäuse ein umlaufender Abstand gebildet werden, in den das Material des rohrförmigen Abschnitts des Dichtelements ausweichen kann, wenn der Leitungsabschnitt in das Dichtelement eingeschoben wird.

Gemäß einem Ausführungsbeispiel wird die innenseitige konische Verjüngung des Dichtelements durch eine in axialer Richtung zum zweiten Ende hin zunehmende Wandstärke des rohrförmigen Abschnitts erreicht. Alternativ kann bei einer außenseitig konischen Verjüngung die innenseitige konische Verjüngung durch eine konstante oder im Wesentlichen konstante Wandstärke in axialer Richtung erreicht werden.

Gemäß einem Ausführungsbeispiel ist der rohrförmige Abschnitt des Dichtelements zur Führung und zur radialen Stützung des freien Endes des Leitungsabschnitts beim Einschieben desselben in den Aufnahmeraum ausgebildet. In anderen Worten bildet der rohrförmige Abschnitt des Dichtelements quasi eine hülsenartige Führung für den Leitungsabschnitt. Dadurch wird eine leichte Einführbarkeit des Leitungsabschnitts bei gleichzeitig hoher Dichtigkeit der Leitungskupplung erreicht.

Gemäß einem Ausführungsbeispiel ist an dem Dichtelement im Übergangsbereich zwischen der Wulst und dem rohrförmigen Abschnitt innenseitig eine Sicke vorgesehen. Diese Sicke hat den Vorteil, dass beim Einführen des Leitungsabschnitts in das Dichtelement verdrängtes Material in diese Sicke hinein ausweichen kann.

Gemäß einem Ausführungsbeispiel weist der rohrförmige Abschnitt außenseitig zumindest eine Rastnase auf. Durch diese Rastnase kann ein Formschluss zwischen dem Gehäuse und dem Dichtelement erreicht werden. Dadurch kann eine unerwünschte falsche Platzierung des Dichtelements, beispielsweis durch das Herausziehen der Leitung wirksam vermieden werden.

Gemäß einem Ausführungsbeispiel ist die Rastnase durch eine umfangsseitig umlaufende Wulst gebildet ist. Im Gehäuse kann eine mit dieser Wulst korrespondierende Sicke gebildet sein, in die die Wulst eintauchen kann, so dass ein Formschluss zwischen dem Dichtelement und dem Gehäuse erreicht wird.

Gemäß einem Ausführungsbeispiel weist der Aufnahmeraum einen ringfömigen Anschlag für das freie Ende des Leitungsabschnitts auf, d.h. das freie Ende des Leitungsabschnitts gelangt beim Einschieben der Leitung in die Leitungskupplung gegenüber diesem Anschlag zur Anlage. Der ringförmige Anschlag bildet gleichzeitig einen Anschlag für das zweite freie Ende des Dichtelements, d.h. das Dichtelement liegt mit dem zweiten freien Ende gegenüber dem ringförmigen Anschlag an. Vorzugsweise weist der ringförmige Anschlag keine Stufung auf und liegt in einer senkrecht zur Längsachse verlaufenden Ebene, so dass das zweite freie Ende des Dichtelements und das freie Ende des Leitungsabschnitts in einer gemeinsamen Ebene zu liegen kommen. Dadurch wird eine signifikante Reduzierung des Totraums erreicht.

Gemäß einem Ausführungsbeispiel ist die Länge des rohrförmigen Abschnitts größer als der Querschnittsdurchmesser der Wulst. Bei Einhaltung dieses geometrischen Zusammenhangs kann eine hohe Abdichtwirkung im Bereich des rohrförmigen Abschnitts des Dichtelements erreicht werden, da der in den rohrförmigen Abschnitt eingeschobene Leitungsabschnitt eine signifikante Länge aufweist.

Gemäß einem Ausführungsbeispiel ist das Dichtelement einteilig ausgebildet ist.

Gemäß einem anderen Ausführungsbeispiel ist das Dichtelement mehrteilig ausgebildet, und zwar aus einem ersten Dichtelementteil in Form der Wulst und einem zweiten Dichtelementteil in Form des rohrförmigen Abschnitts.

Gemäß einem Ausführungsbeispiel ist außenseitig an dem rohrförmigen Abschnitt im Bereich dessen freien Endes eine Abschrägung oder Ausnehmung vorgesehen. Diese Abschrägung oder Ausnehmung hat den Vorteil, dass beim Einführen des Leitungsabschnitts in den rohrförmigen Abschnitt des Dichtelements aufgrund von Materialverdrängung im Bereich des freien Endes eine Verkippung auftritt. Diese Verkippung führt zu einer Erhöhung der Anpresskraft an den Anschlag, gegenüber dem das Dichtelement freiendseitig anliegt und damit zu einer höheren Dichtigkeit in diesem Bereich, so dass ein Hinterfließen des rohrförmigen Abschnitts im Bereich dessen freien Endes wirksam vermieden werden kann.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch eine Leitungskupplung ohne eingeschobenem Leitungsende;
- Fig. 2: beispielhaft einen Längsschnitt durch eine Leitungskupplung mit eingeschobenem Leitungsende;
- Fig. 3: beispielhaft eine Längsschnittdarstellung eines Dichtelements zur Anwendung in einer Leitungskupplung;
- Fig. 4: beispielhaft einen Längsschnitt durch eine Leitungskupplung ohne eingeschobenem Leitungsende, wobei das Dichtelement eine Rastnase aufweist; und
- Fig. 5: beispielhaft eine Längsschnittdarstellung eines Dichtelements mit konisch aufweitendem Außendurchmesser zur Anwendung in einer Leitungskupplung; und
- Fig. 6: beispielhaft eine Längsschnittdarstellung eines Dichtelements zur Anwendung in einer Leitungskupplung, das eine außenseitige Abschrägung im Bereich des freien Endes des rohrförmigen Abschnitts aufweist.

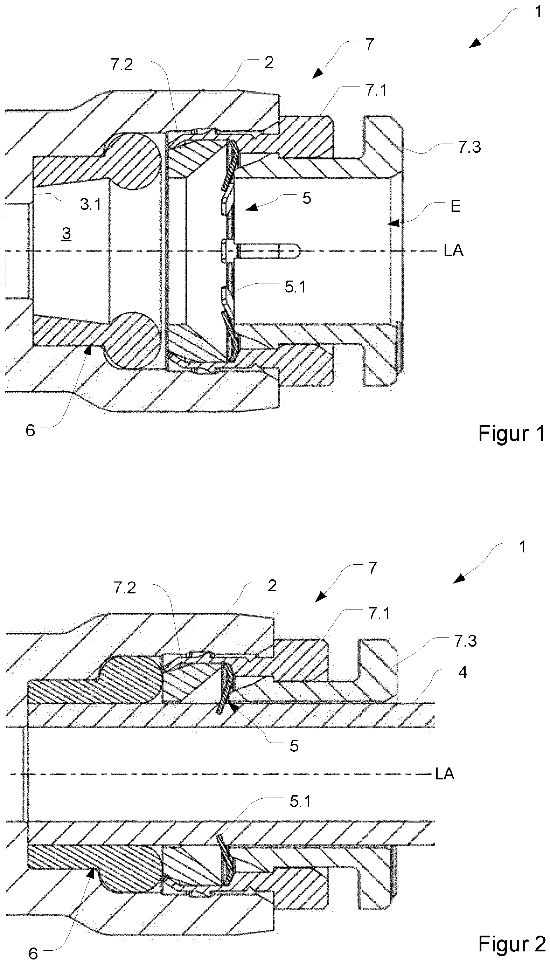

Figur 1 zeigt eine Schnittdarstellung durch eine Leitungskupplung 1 entlang deren Längsachse LA. Die Leitungskupplung 1 ist dazu ausgebildet, eine Verbindung eines freien Leitungsendes mit einem Bauteil, beispielsweise einem Ventil, oder einem Leitungsende eines weiteren Leitungsabschnitts herzustellen. Beispielsweise kann die Leitungskupplung auch als Steckeinsatz oder Schraubeinsatz ausgebildet sein, die in ein Gehäuse eines Bauteils, beispielsweise eines Ventils, eingeschraubt oder eingepresst wird. Die Leitung kann beispielsweise ein flexibler Schlauch sein.

Die Leitungskupplung 1 weist ein Gehäuse 2 auf, in das ein Leitungsabschnitt 4, insbesondere das freie Leitungsende einer Leitung, einführbar ist. Die Leitungskupplung 1 ist bezüglich der Längsachse LA im Wesentlichen roationssymmetrisch aufgebaut.

Das Gehäuse 2 weist einen Aufnahmeraum 3 mit einer Eingangsöffnung E auf, über die ein freies Ende eines Leitungsabschnitts 4 in das Gehäuse 2 des Leitungskupplung 1 einführbar ist. In dem Aufnahmeraum 3 ist eine Klemmeinrichtung 7 vorgesehen. Die Klemmeinrichtung 7 ermöglicht ein lösbares Verbinden des freien Endes eines Leistungsabschnitts 1 mit der Leitungskupplung 1, insbesondere derart, dass das freie Ende des Leitungsabschnitts 4 erst dann wieder aus der Leitungskupplung 1 herausgezogen werden kann, wenn eine Entsicherungsmechanik der Klemmeinrichtung 7 betätigt wurde.

Die Klemmeinrichtung K umfasst eine Hülse 7.1, die in den Aufnahmeraum 3 eingesetzt ist. Mit der Hülse 7.1 ist ein Stützring 7.2 gekoppelt, beispielsweise derart, dass die Hülse 7.1 den Stützring 7.2 außenseitig zumindest abschnittsweise umgreift.

Die Klemmeinrichtung 7 umfasst des Weiteren Fixiermittel 5, mittels denen die Sicherung des Leitungsabschnitts 4 gegen unerwünschtes Herausziehen erfolgt. Beispielsweise sind die Fixiermittel 5 in Richtung der Längsachse LA gesehen zwischen der Hülse 7.1 und dem Stützring 7.2 angeordnet und werden vorzugsweise zwischen der Hülse 7.1 und dem Stützring 7.2 klemmend gehalten, so dass diese in ihrer axialen Lage im Gehäuse 2 gesichert sind. Die Fixiermittel 5 können beispielsweise als Krallenring ausgebildet sein. Der Stützring 7.2 stützt sich beispielsweise in axialer Richtung an einem Dichtelement 6 ab, das sich wiederum an einem Anschlag 3.1 abstützt. Der Anschlag 3.1 ist beispielsweise durch eine Schulter oder eine Stufung im Gehäuse 3 gebildet.

Wie in Fig. 2 ersichtlich, bildet der Anschlag 3.1 gleichzeitig eine Anlagefläche für das freie Ende des in den Aufnahmeraum 3 eingeschobenen Leitungsabschnitts 4. Vorzugsweise wird der Anschlag 3.1 durch eine senkrecht zur Längsachse LA verlaufende, ringartig ausgebildete Fläche gebildet, die einen in axialer Richtung gesehen höhengleichen Anschlag für das Dichtelement 6 und das freie Ende des Leitungsabschnitts 4 bildet.

Die Klemmeinrichtung 7 umfasst des Weiteren einen Lösering 7.3, über den die Fixierung des Leitungsabschnitts 4 in der Leitungskupplung 1 deaktiviert werden kann. Der Lösering 7.3 kann beispielsweise in die Hülse 7.1 eingesetzt sein. Insbesondere kann der Lösering 7.3 durch eine Rastmechanik in der Hülse 7.1 gegen ein Herauslösen fixiert, jedoch in der Hülse 7.1 in axialer Richtung verschiebbar gehalten sein.

Die Fixierung der Klemmeinrichtung 7 in dem Gehäuse 2 erfolgt vorzugsweise wiederum durch eine Rastmechanik. Insbesondere kann die Hülse 7.1 außenseitig Rastmittel aufweisen, über die die Hülse 7.1 in dem Gehäuse 2 verrastet gehalten wird. Die weiteren Bestandteile der Klemmeinrichtung 7, d.h. der Stützring 7.2, die Fixiermittel 5 und der Lösering 7.3 werden indirekt mittels der Hülse 7.1 im Gehäuse 2 fixiert. Dabei liegen der Stützring 7.2 und die Fixiermittel 5 gegeneinander an und stützen sich jeweils gegenüber in der Hülse 7.1 gebildeten Schultern ab, so dass der Stützring 7.2 und die Fixiermittel 5 dadurch klemmend in der Hülse 7.1 fixiert werden.

Zur Montage der Klemmeinrichtung 7 können die Hülse 7.1, der Stützring 7.2, die Fixiermittel 5 und der Lösering 7.3 außerhalb des Gehäuses 2 vormontiert und anschließend gemeinsam im zusammengefügten Zustand in den Aufnahmeraum 3 eingebracht werden.

Zur Fixierung des Leitungsabschnitts 4 wird dieser mit dessen freien Ende in den Lösering 7.3 eingeführt und in axialer Richtung geführt durch das nachfolgend beschriebene Dichtelement 6 so weit vorgeschoben, bis das freie Ende des Leitungsabschnitts 4 an dem Anschlag 3.1 anschlägt.

Wie insbesondere in Fig. 1 zu erkennen ist, weisen die Fixiermittel 5 radial nach innen abstehende Krallen 5.1 auf. Diese Krallen 5.1 sind gegenüber einer senkrecht zur Längsachse LA ausgerichteten Ebene geneigt angeordnet. Dadurch ist ein Einschieben des Leitungsabschnitts 4 von der Eingangsöffnung E in den Aufnahmeraum 3 hinein möglich, ein unbeabsichtigtes Herausziehen des Leitungsabschnitts 4 wird aber durch das Eingreifen der Krallen 5.1 in die Wandung der Leitungsabschnitts 4 wirksam verhindert.

Der Lösering 7.3 ist dazu ausgebildet, den Eingriff der Krallen 5.1 in die Wandung der Leitungsabschnitts 4 aufzulösen, um den Leitungsabschnitt 4 wieder aus dem Aufnahmeraum herausziehen zu können. Der Lösering 7.3 ist dabei axial relativ zur Hülse 7.1 bzw. zum Gehäuse 2 verschiebbar, und zwar derart, dass dieser aus einer ersten Schiebeposition, wie sie in den Figuren 1 und 2 gezeigt ist, in eine zweite Schiebeposition positionierbar ist, in der der Lösering 7.3 in Einführrichtung des Leitungsabschnitts 4 weiter in den Aufnahmeraum 3 eingeschoben ist. Durch axiales Drücken bzw. Verschiebung des Löserings 7.3 werden die Krallen 5.1 der Fixiermittel 5 in Einführrichtung, d.h. in Richtung des Anschlags 3.1 des Gehäuses 2 reversibel verformt, und dabei außer Eingriff mit der Wandung des Leitungsabschnitts 4 gebracht, so dass der Leitungsabschnitt 4 herausgezogen werden kann.

Es versteht sich, dass auch alternative Klemm- bzw. Fixierungsmechanismen oder -methoden zum Einsatz kommen können.

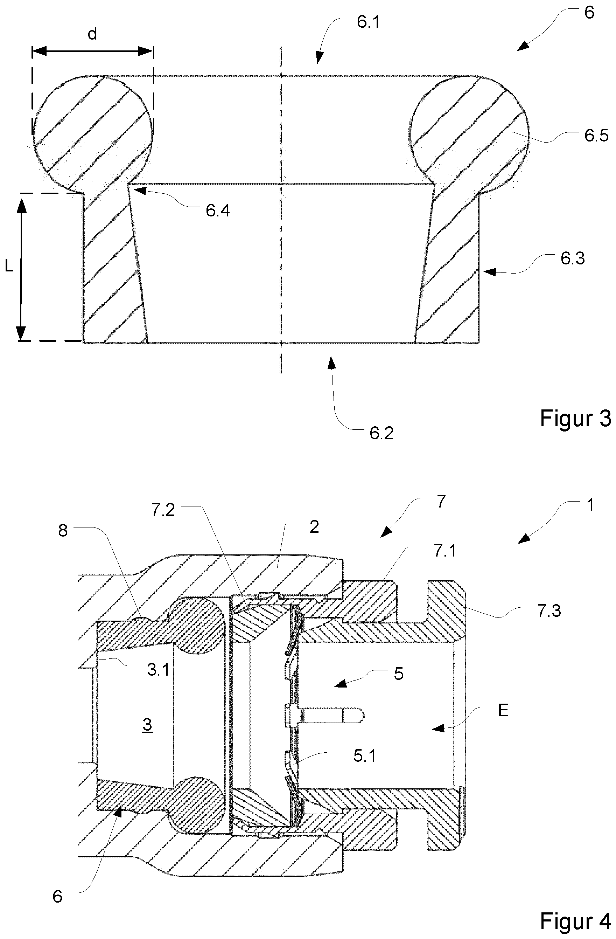

Das Dichtelement 6 der Leitungskupplung 1 ist dazu ausgebildet, den im Bereich des freien Endes des Leitungsabschnitts 4 bestehenden Totraum zu minimieren. Fig. 3 zeigt das Dichtelement 6 in Alleinstellung, Fig. 1 das im Gehäuse 2 eingesetzte Dichtelement 6 ohne eingeschobenen Leitungsabschnitt 4 und Fig. 2 das im Gehäuse 2 eingesetzte Dichtelement 6 mit eingeschobenem Leitungsabschnitt 4.

Das Dichtelement 6 ist vorzugsweise rotationsymmetrisch oder im Wesentlichen rotationssymmetrisch zur Längsachse LA ausgebildet.

Das Dichtelement 6 ist hülsenförmig, d.h. als Dichthülse ausgebildet und erstreckt sich von dem Anschlag 3.1 in axialer Richtung über eine Teillänge des Leitungsabschnitts 4. Da dieser Anschlag 3.1, wie zuvor ausgeführt, ebenfalls die Anlagefläche für das freie Ende des Leitungsabschnitts 4 bildet, wird ein außenseitig um das freie Ende des Leitungsabschnitts 4 verlaufender Totraum wirksam verhindert.

Das Dichtelement 6 weist ein erstes Ende 6.1 und ein zweites Ende 6.2 auf. Am ersten freie Ende 6.1 ist eine ringförmige, umfangsseitig umlaufende Wulst 6.5 vorgesehen. Diese Wulst 6.5 ist O-Ring-förmig oder im Wesentlichen O-Ring-förmig ausgebildet, d.h. die Wulst 6.5 ist kreisrund und weist einen kreisrunden Querschnitt auf. Alternativ kann die Wulst 6.5 auch andere Querschnittsformen aufweisen, beispielsweise eine ovale, polygone oder eine aus Rundungen und Ecken zusammengesetzte Querschnittsform. An diese Wulst 6.5schließt sich ein rohrförmiger Abschnitt 6.3 an. Das der Wulst 6.5 abgewandte freie Ende des rohrförmigen Abschnitts 6.3 bildet das zweite freie Ende 6.2 des Dichtelements 6. Das Dichtelement 6 ist einstückig ausgebildet, beispielsweise als einstückig gespritzte Elastomerdichtung. Alternativ kann die Wulst 6.5 und der rohrförmige Abschnitt 6.3 durch getrennte Dichtungsteile gebildet werden, d.h. das Dichtelement 6 ist mehrteilig ausgebildet, wobei die Wulst 6.5 und der rohrförmige Abschnitt 6.3 voneinander unabhängige Teile sind, die beispielsweise einzeln in das Gehäuse 2 eingesetzt sind.

Wie insbesondere in Fig. 1 und 3 zu erkennen, ist der rohrförmige Abschnitt 6.3 des Dichtelements 6 konisch ausgebildet. Der rohrförmige Abschnitt 6.3 ist insbesondere derart ausgebildet, dass sich dieser zum zweiten Ende 6.2 hin innenseitig verjüngt, d.h. der Innendurchmesser des rohrförmigen Abschnitts 6.3 nimmt von der Wulst 6.5 zum zweiten freien Ende 6.2 hin ab. Wie insbesondere in Fig. 3 ersichtlich, wird das innenseitige Verjüngen des rohrförmigen Abschnitts 6.3 dadurch erreicht, dass die Wandungsstärke des rohrförmigen Abschnitts 6.3 zum zweiten Ende hin zunimmt. Vorzugsweise ist die Außenkontur des rohrförmigen Abschnitts 6.3 rotationssymmetrisch zur Längsachse des Dichtelements 6 ausgebildet und weist in axialer Richtung gesehen einen konstanten Radius bezogen auf diese Längsachse auf. Durch diese Form des rohrförmigen Abschnitts 6.3 wird erreicht, dass der in das Dichtelement 6 eingeschobene Leitungsabschnitt 4 freiendseitig aufgrund der konischen Form fest von dem Dichtelement 6 umschlossen wird, so dass auch bei Verbiegungen der aus der Leitungskupplung herausstehenden Leitung ein Hinterfließen des freien Endes des Leitungsabschnitts 4 oder des Dichtelements 6 wirksam verhindert werden kann.

Wie insbesondere in den Fig. 1 und Fig. 3 zu erkennen, steht die Wulst 6.5 sowohl außenumfangseitig als auch innenumfangsseitig gegenüber der Außen- bzw. Innenkontur des rohrförmigen Abschnitts 6.3 in einem Bereich in unmittelbarer Nähe der Wulst 6.5 vor. Dadurch wird innenseitig im Übergangsbereich zwischen Wulst 6.5 und rohrförmigem Abschnitt 6.3 eine Sicke 6.4 am Dichtelement 6 erreicht, in die das beim Einschieben des Leitungsabschnitts verdrängte Material ausweichen kann. Das verformte Dichtelement 6 ist in Fig. 2 zu erkennen.

Weiterhin vorzugsweise weist der Querschnitt der Wulst 6.5 einen Durchmesser d auf der kleiner ist als die Länge L des rohrförmigen Abschnitts 6.3. Dadurch wird erreicht, dass das Dichtelement 6 auch eine hinreichende Dichtigkeit beim Verbiegen der Leitung aufweist.

Wie in Fig. 4 ersichtlich, kann an dem rohrförmigen Abschnitt 6.3 des Dichtelements 6 außenumfangsseitig zudem eine Rastnase 8 gebildet sein, um das Dichtelement lagemäßig gegenüber dem Gehäuse 2 zu fixieren. Die Rastnase 8 kann beispielsweise durch eine außenumfangsseitig umlaufende Wulst gebildet sein, die formschlüssig in eine korrespondierende Ausnehmung im Gehäuse 2 eingreift.

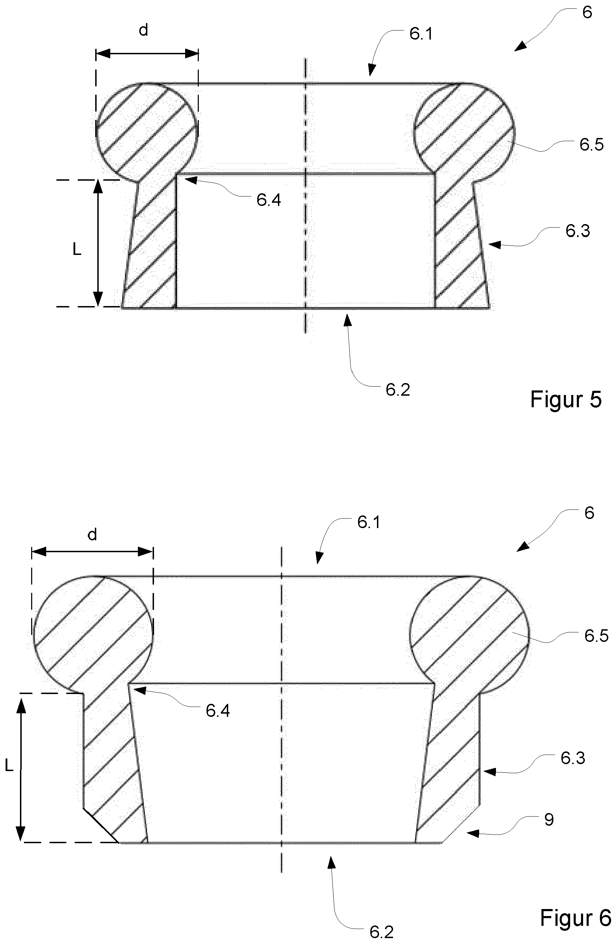

Fig. 5 zeigt eine alternative Ausführungsform des Dichtelements 6. Im Unterschied zur Ausführungsform des Dichtelements 6 gemäß Fig. 3 weitet sich der rohrförmige Abschnitt 6.3 im nicht eingebauten Zustand außenseitig in Richtung des zweiten freien Endes 6.2 konisch auf, d.h. der Außendurchmesser nimmt in Richtung des freien Endes 6.2 zu. Der rohrförmige Abschnitt 6.3 kann im nicht eingebauten Zustand innenseitig einen konstanten oder nahezu konstanten Durchmesser aufweisen. Vorzugsweise wird jedoch das Dichtelement beim Einbau in das Gehäuse 2 der Leitungskupplung 1 radial gestaucht, so dass sich im eingebauten Zustand des Dichtelements 6 innenseitig eine konische Verjüngung zum zweiten freien Ende hin ergibt.

Fig. 6 zeigt eine Ausführungsform des Dichtelements 6 ähnlich der Ausführung gemäß Fig. 3. Der wesentliche Unterschied zur Ausführungsform gemäß Fig. 3 besteht darin, dass außenumfangsseitig umlaufend im Bereich des zweiten freien Endes 6.2 eine Abschrägung 9 vorgesehen ist. Die Abschrägung 9 bietet den Vorteil, dass der rohrförmige Abschnitt 6.3 des Dichtelements 6 freiendseitig nach außen verkippen kann, wenn der Leitungsabschnitt in den rohrförmigen Abschnitt 6.3 eingeschoben wird. Die Verkippung nach außen hat den Vorteil, dass dabei der Anpressdruck des freien Endes des rohrförmigen Abschnitts 6.3 gegen den Anschlag 3.1 erhöht wird, so dass die Dichtigkeit an der Schnittstelle zwischen dem Anschlag 3.1 des Gehäuses 2 und dem Dichtelement 6 erhöht wird.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Leitungskupplung
- 2: Gehäuse
- 3: Aufnahmeraum
- 3.1: Anschlag
- 4: Leitungsabschnitt
- 5: Fixiermittel
- 5.1: Krallen
- 6: Dichtelement
- 6.1: erstes freies Ende
- 6.2: zweites freies Ende
- 6.3: rohrförmiger Abschnitt
- 6.4: Sicke
- 6.5: Wulst
- 7: Klemmeinrichtung
- 7.1: Hülse
- 7.2: Stützring
- 7.3: Lösering
- 8: Rastnase
- 9: Abschrägung
- d: Durchmesser
- E: Eingangsöffnung
- L: Länge rohrförmiger Abschnitt
- LA: Längsachse

## Patentansprüche

1. Leitungskupplung umfassend ein Gehäuse (2) mit einem Aufnahmeraum (3) für einen Leitungsabschnitt (4), mit Fixiermitteln (5) zum lösbaren Fixieren des Leitungsabschnitts (4) in dem Gehäuse (2) und einem Dichtelement (6), das in dem Aufnahmeraum (3) angeordnet und dazu ausgebildet ist, das im Aufnahmeraum (3) aufgenommene freie Ende des Leitungsabschnitts (4) außenumfangsseitig zu umschließen und dabei die Schnittstelle zwischen dem Gehäuse (2) und dem Leitungsabschnitt (4) fluiddicht abzudichten, **dadurch gekennzeichnet, dass** das Dichtelement (6) hülsenförmig mit einem ersten und einem zweiten freien Ende (6.1, 6.2) ausgebildet ist, dass am ersten freien Ende (6.1) eine Wulst (6.5) vorgesehen ist, dass von der Wulst (6.5) ein rohrförmiger Abschnitt (6.3) absteht, der randseitig das zweite freie Ende (6.2) ausbildet und dass der rohrförmige Abschnitt (6.3) des Dichtelements (6) zumindest im eingebauten Zustand des Dichtelements zum zweiten freien Ende (6.2) hin innenseitig konisch verjüngt ausgebildet ist.

2. Leitungskupplung nach Anspruch 1, **dadurch gekennzeichnet, dass** die Wulst (6.5) O-Ring-förmig ausgebildet ist.

3. Leitungskupplung nach einem der vorhergehenden Ansprüche, **dadurch gekennzeichnet, dass** der rohrförmige Abschnitt (6.3) im Bereich des zweiten freien Endes (6.2) in Längsrichtung gesehen einen konstanten Außendurchmesser aufweist.

4. Leitungskupplung nach Anspruch 1 oder 2, **dadurch gekennzeichnet, dass** das Dichtelement (6) derart klemmend im Gehäuse (2) gehalten ist, dass der rohrförmige Abschnitt (6.3), dessen Außendurchmesser sich im ausgebauten Zustand des Dichtelements (6) in Längsrichtung gesehen zum zweiten freien Ende (6.2) hin konisch aufweitet, im eingebauten Zustand des Dichtelements (6) radial komprimiert wird, so dass sich im eingebauten Zustand des Dichtelements (6) ein reduzierter Innendurchmesser des rohrförmigen Abschnitts (6.3) ergibt.

5. Leitungskupplung nach Anspruch 1 oder 2, **dadurch gekennzeichnet, dass** der rohrförmige Abschnitt (6.3) zum zweiten freien Ende (6.2) hin außenseitig konisch verjüngt ausgebildet ist.

6. Leitungskupplung nach einem der vorhergehenden Ansprüche, **dadurch gekennzeichnet, dass** die innenseitige konische Verjüngung des Dichtelements (6) durch eine zum zweiten Ende (6.2) hin zunehmende Wandstärke des rohrförmigen Abschnitts erreicht wird.

7. Leitungskupplung nach einem der vorhergehenden Ansprüche, **dadurch gekennzeichnet, dass** der rohrförmige Abschnitt (6.3) des Dichtelements (6) zur Führung und zur radialen Stützung des freien Endes des Leitungsabschnitts (4) beim Einschieben desselben in den Aufnahmeraum (3) ausgebildet ist.

8. Leitungskupplung nach einem der vorhergehenden Ansprüche, **dadurch gekennzeichnet, dass** an dem Dichtelement (6) zwischen der Wulst (6.5) und dem rohrförmigen Abschnitt (6.3) innenseitig eine Sicke (6.4) vorgesehen ist.

9. Leitungskupplung nach einem der vorhergehenden Ansprüche, **dadurch gekennzeichnet, dass** der rohrförmige Abschnitt (6.3) außenseitig zumindest eine Rastnase (8) aufweist.

10. Leitungskupplung nach Anspruch 9, **dadurch gekennzeichnet, dass** die Rastnase (8) durch eine umfangsseitig umlaufende Wulst gebildet ist.

11. Leitungskupplung nach einem der vorhergehenden Ansprüche, **dadurch gekennzeichnet, dass** der Aufnahmeraum (3) einen ringfömigen Anschlag (3.1) für das freie Ende des Leitungsabschnitts (4) aufweist, wobei der ringförmige Anschlag (3.1) gleichzeitig einen Anschlag für das zweite freie Ende (6.2) des Dichtelements (6) bildet.

12. Leitungskupplung nach einem der vorhergehenden Ansprüche, **dadurch gekennzeichnet, dass** die Länge (L) des rohrförmigen Abschnitts (6.3) größer ist als der Durchmesser (d) des Querschnitts der Wulst (6.5).

13. Leitungskupplung nach einem der vorhergehenden Ansprüche, **dadurch gekennzeichnet, dass** das Dichtelement (6) einteilig ausgebildet ist oder dass das Dichtelement (6) mehrteilig ausgebildet ist, und zwar aus einem ersten Dichtelementteil in Form der Wulst (6.5) und einem zweiten Dichtelementteil in Form des rohrförmigen Abschnitts (6.3).

14. Leitungskupplung nach einem der vorhergehenden Ansprüche, **dadurch gekennzeichnet, dass** außenseitig an dem rohrförmigen Abschnitt (6.3) im Bereich dessen freien Endes eine Abschrägung (9) oder Ausnehmung vorgesehen ist.

## Claims

1. A pipe coupling comprising a housing (2) with a receiving space (3) for a pipe section (4), with fixing members (5) for releasably fixing the pipe section (4) in the housing (2), and a sealing element (6) which is arranged in the receiving space (3) and is designed to surround the free end of the pipe section (4), which is received in the receiving space (3), on the outer circumference and thereby seal the interface between the housing (2) and the pipe section (4) in a fluid-tight manner, **characterized in that** the sealing element (6) is designed in the form of a sleeve with a first and a second free end (6.1, 6.2), **in that** a bulge (6.5) is provided at the first free end (6.1), **in that** a tubular section (6.3) protrudes from the bulge (6.5) and forms the second free end (6.2) on the edge side, and **in that** at least in the installed state the tubular section (6.3) of the sealing element (6) is designed to be conically tapered on the inner side towards the second free end (6.2).

2. The pipe coupling according to claim 1, **characterized in that** the bulge (6.5) has the shape of an O-ring.

3. The pipe coupling according to any of the preceding claims, **characterized in that** the tubular section (6.3) has a constant outer diameter in the region of the second free end (6.2), viewed in the longitudinal direction.

4. The pipe coupling according to any of the claims 1 or 2, **characterized in that** the sealing element (6) is held in a clamping manner in the housing (2) in such a way that the tubular section (6.3), the outer diameter of which, in the uninstalled state of the sealing element (6), expands conically towards the second free end (6.2), as seen in the longitudinal direction, is radially compressed in the installed state of the sealing element (6), so that a reduced inner diameter of the tubular section (6.3) results in the installed state of the sealing element (6).

5. The pipe coupling according to any of claims 1 or 2, **characterized in that** the tubular section (6.3) is conically tapered on the outside towards the second free end (6.2).

6. The pipe coupling according to any of the preceding claims, **characterized in that** the inside conical taper of the sealing element (6) is achieved by a wall thickness of the tubular section increasing towards the second end (6.2).

7. The pipe coupling according to any of the preceding claims, **characterized in that** the tubular section (6.3) of the sealing element (6) is designed to guide and radially support the free end of the pipe section (4) when the latter is pushed into the receiving space (3).

8. The pipe coupling according to any of the preceding claims, **characterized in that** a bead (6.4) is provided on the inside of the sealing element (6) between the bulge (6.5) and the tubular section (6.3).

9. The pipe coupling according to any of the preceding claims, **characterized in that** the tubular section (6.3) has at least one detent lug (8) on the outside.

10. The pipe coupling according to claim 9, **characterized in that** the detent lug (8) is formed by a circumferential bead.

11. The pipe coupling according to any of the preceding claims, **characterized in that** the receiving space (3) has an annular stop (3.1) for the free end of the pipe section (4), the annular stop (3.1) also forming a stop for the second free end (6.2) of the sealing element (6).

12. The pipe coupling according to any of the preceding claims, **characterized in that** the length (L) of the tubular section (6.3) is greater than the diameter (d) of the cross-section of the bulge (6.5).

13. The pipe coupling according to any of the preceding claims, **characterized in that** the sealing element (6) is formed in one piece or **in that** the sealing element (6) is formed in multiple pieces, namely from a first sealing element part in the form of the bulge (6.5) and a second sealing element part in the form of the tubular section (6.3).

14. The pipe coupling according to any of the preceding claims, **characterized in that** a chamfer (9) or recess is provided on the outside of the tubular section (6.3) in the region of its free end.

## Revendications

1. Raccord pour conduite, comprenant un boîtier (2) muni d'un espace de réception (3) pour un tronçon de conduite (4), de moyens de fixation (5) pour fixer de manière amovible le tronçon de conduite (4) dans le boîtier (2) et d'un élément d'étanchéité (6) qui est disposé dans l'espace de réception (3) et qui est réalisé pour entourer l'extrémité libre du tronçon de conduite (4), reçue dans l'espace de réception (3), du côté de la périphérie extérieure en rendant étanche aux fluides l'interface entre le boîtier (2) et le tronçon de conduite (4),
**caractérisé en ce que** l'élément d'étanchéité (6) est réalisé en forme de douille présentant une première et une deuxième extrémité libre (6.1, 6.2),
**en ce qu'**un bourrelet (6.5) est prévu à la première extrémité libre (6.1),
**en ce qu'**un tronçon tubulaire (6.3) formant la deuxième extrémité libre (6.2) du côté du bord dépasse du bourrelet (6.5),
et **en ce que** le tronçon tubulaire (6.3) de l'élément d'étanchéité (6) est réalisé de manière à se rétrécir coniquement du côté intérieur vers la deuxième extrémité libre (6.2), au moins dans l'état monté de l'élément d'étanchéité.

2. Raccord pour conduite selon la revendication 1,
**caractérisé en ce que** le bourrelet (6.5) est réalisé en forme de joint torique.

3. Raccord pour conduite selon l'une des revendications précédentes,
**caractérisé en ce que** dans la zone de la deuxième extrémité libre (6.2), le tronçon tubulaire (6.3) présente un diamètre extérieur constant, vu dans le sens longitudinal.

4. Raccord pour conduite selon la revendication 1 ou 2,
**caractérisé en ce que** l'élément d'étanchéité (6) est maintenu par serrage dans le boîtier (2) de telle sorte que le tronçon tubulaire (6.3), dont le diamètre extérieur, vu dans le sens longitudinal, s'élargit coniquement vers la deuxième extrémité libre (6.2) dans l'état démonté de l'élément d'étanchéité (6), est radialement comprimé dans l'état monté de l'élément d'étanchéité (6), de sorte qu'il en résulte un diamètre intérieur réduit du tronçon tubulaire (6.3) dans l'état monté de l'élément d'étanchéité (6).

5. Raccord pour conduite selon la revendication 1 ou 2,
**caractérisé en ce que** le tronçon tubulaire (6.3) est réalisé de manière à se rétrécir coniquement du côté extérieur vers la deuxième extrémité libre (6.2).

6. Raccord pour conduite selon l'une des revendications précédentes,
**caractérisé en ce que** le rétrécissement conique du côté intérieur de l'élément d'étanchéité (6) est obtenu par une épaisseur de paroi du tronçon tubulaire croissante vers la deuxième extrémité (6.2).

7. Raccord pour conduite selon l'une des revendications précédentes,
**caractérisé en ce que** le tronçon tubulaire (6.3) de l'élément d'étanchéité (6) est réalisé pour guider et soutenir radialement l'extrémité libre du tronçon de conduite (4) lors de l'insertion de celle-ci dans l'espace de réception (3).

8. Raccord pour conduite selon l'une des revendications précédentes,
**caractérisé en ce qu'**une moulure (6.4) est prévue sur l'élément d'étanchéité (6) du côté intérieur entre le bourrelet (6.5) et le tronçon tubulaire (6.3).

9. Raccord pour conduite selon l'une des revendications précédentes,
**caractérisé en ce que** le tronçon tubulaire (6.3) présente au moins un ergot d'enclenchement (8) du côté extérieur.

10. Raccord pour conduite selon la revendication 9,
**caractérisé en ce que** l'ergot d'enclenchement (8) est formé par un bourrelet s'étendant du côté de la périphérie.

11. Raccord pour conduite selon l'une des revendications précédentes, **caractérisé en ce que** l'espace de réception (3) présente une butée annulaire (3.1) pour l'extrémité libre du tronçon de conduite (4), la butée annulaire (3.1) formant simultanément une butée pour la deuxième extrémité libre (6.2) de l'élément d'étanchéité (6).

12. Raccord pour conduite selon l'une des revendications précédentes, **caractérisé en ce que** la longueur (L) du tronçon tubulaire (6.3) est supérieure au diamètre (d) de la section transversale du bourrelet (6.5).

13. Raccord pour conduite selon l'une des revendications précédentes, **caractérisé en ce que** l'élément d'étanchéité (6) est réalisé d'une seule pièce ou **en ce que** l'élément d'étanchéité (6) est réalisé en plusieurs parties, à savoir en une première partie d'élément d'étanchéité sous la forme du bourrelet (6.5) et en une deuxième partie d'élément d'étanchéité sous la forme du tronçon tubulaire (6.3).

14. Raccord pour conduite selon l'une des revendications précédentes, **caractérisé en ce qu'**un chanfrein (9) ou un évidement est prévu du côté extérieur sur le tronçon tubulaire (6.3) dans la zone de son extrémité libre.
